Europäisches Patentamt

European Patent Office

Office européen des brevets

(11) Publication number: **0 071 355**
**B1**

# (12) EUROPEAN PATENT SPECIFICATION

(45) Date of publication of patent specification: **12.03.86**

(21) Application number: **82303604.1**

(22) Date of filing: **09.07.82**

(51) Int. Cl.⁴: **C 09 D 5/08,** C 09 D 3/74,
B 05 D 7/16

(54) Corrosion resistant autodeposition coatings.

(30) Priority: **24.07.81 GB 8122969**

(43) Date of publication of application:
**09.02.83 Bulletin 83/06**

(45) Publication of the grant of the patent:
**12.03.86 Bulletin 86/11**

(84) Designated Contracting States:
**BE DE FR GB NL SE**

(56) References cited:
**EP-A-0 032 297**
**FR-A-2 374 342**
**GB-A-1 241 991**
**GB-A-1 556 869**
**US-A-4 191 676**

(73) Proprietor: **SCOTT BADER COMPANY LIMITED**
**Wollaston, Northamptonshire NN9 7RL (GB)**

(72) Inventor: **Knightley, Jack Albury**
**39 Fulwell Road**
**Bozeat Wellingborough Northamptonshire (GB)**

(74) Representative: **Harrison, David Christopher**
**et al**
**MEWBURN ELLIS & CO 2/3 Cursitor Street**
**London EC4A 1BQ (GB)**

Courier Press, Leamington Spa, England.

EP 0 071 355 B1

## Description

This invention relates to compositions for autodeposition of a corrosion resistant coating on a metallic surface.

Autodeposition coatings can be described as those applied from acidic aqueous media containing solid polymer particles without the aid of electricity, the thickness and weight of the coating increasing with time of immersion in the coating bath (see BP 1, 538,911). The coatings result from the ability of the coating composition to dissolve from the metallic surface metal ions in amounts which cause the resin particles to deposit on the surface in a manner such that there is a continuous build up of resin on the surface. Most of the coating compositions contain hydrofluoric acid and an oxiding agent such as hydrogen peroxide (BP 1, 130, 687). After immersion in the coating bath for the required period of time the coated metal articles are usually rinsed in water and dried at 110°—150°C for several minutes.

Amongst the advantages for this type of coating are the low energy consumption and the fact that thicker coatings can be applied in shorter times than by other methods.

Corrosion resistant coatings (glossy or mat) have been produced by the process by the incorporation of an acid soluble chromate or by treating the coated panel by immersion in a chromate bath prior to rinsing and drying (BP 1, 559, 118). The coatings can be pigmented using aqueous pigment dispersions, and other ingredients that can be added are surfactants and coalescing agents such as glycol ethers.

A wide range of polymer emulsions have been stated to be suitable for the purpose e.g. styrene/butadiene copolymers, polyvinyl chloride, polyethylene, polytetrafluroethylene, acrylic copolymers and ethylene/vinyl copolymers (BP 1, 130, 687 and BP 1, 467, 151) and copolymers containing 1—50% of vinylidene chloride (BP 1, 538, 911 and 1, 559, 118).

## Summary of the Invention

We have now found that high vinylidene chloride content emulsion copolymers can be used in autodeposition coating compositions to give corrosion resistant coatings without the use of acid soluble chromates although such materials may be used if it is so desired.

A composition in accordance with the invention for autodeposition of a corrosion resistant coating on a metallic surface contains an acidic aqueous medium and an emulsion therein of a copolymer of vinylidene chloride with at least one other monomer copolymerizable therewith, from 70 to 95% inclusive of the weight of the copolymer being vinylidene chloride.

The usefulness of high vinylidene chloride content latices on acidic metal surfaces is surprising, as soluble iron salts such as ferric chloride (derived by acid attack at the metallic surface) are known dehydrochlorination agents for such latices as is readily apparent if such products are stored in uncoated steel drums. The normal result of storage under wet conditions is rapid discolouration of the emulsion and discoloured coatings would be expected but this does not occur with a composition in accordance with the invention.

High vinylidene chloride content (preferably greater than 80% vinylidene chloride) copolymer emulsions have other special properties. For example, most commercial emulsions contain two or more monomers and with respect to film properties such as elongation at break, utility as tensile strengtheners and film hardness, the contribution of each monomer is largely additive i.e. the more of a hard monomer there is in the composition the harder the film becomes. High vinylidene chloride content copolymers give anomalous film properties in relation to their second order transition point (Tg) of the copolymer due to the spatial symmetry of the structure (See D.M. Woodford, Chemistry & Industry, February 19th, 1966, page 316).

Moreover such high vinylidene chloride copolymers have very low moisture vapour transmission rate and low permeability to oxygen which is made use of in the packaging industry where vinylidene chloride copolymer emulsions are used as barrier coatings. These properties are important since for corrosion at metal/coating interfaces there must be water, oxygen and conductive ions present.

Vinylidene chloride copolymers in compositions of the invention contain 70—95% vinylidene chloride (preferably 87—93%) and 5—30% (preferably 7—13%) of at least one or, as specifically exemplified, more than one other monomer copolymerizable therewith, which other monomer is selected from lower ($C_{1-8}$) alkyl acrylates and methacrylates and their derivatives, acrylonitrile, vinyl chloride, acrylamide and its derivatives, vinyl sulphonic acid and salts and esters thereof, acrylic and methacrylic acids and itaconic acid. Examples of the lower alkyl acrylates and methacrylates are methyl, ethyl, hexyl and ethyl hexyl (e.g. 2-ethyl hexyl) acrylates and methacrylates.

The aqueous medium of the composition may be rendered acidic by adding an inorganic acid, for example, hydrofluoric, hydrochloric or sulphuric acid and the composition may additionally include an oxidizing agent, for example, hydrogen peroxide.

The composition may be prepared by emulsion copolymerizing vinylidene chloride monomer with the other monomer(s) in an aqueous medium and merely adding acid to the resultant product. The composition thus obtained may be used directly in an autodeposition process.

The metals suitable for coating by a composition in accordance with the invention includes steel, zinc and its alloy and aluminium.

## Description of Preferred Embodiment

A composition in accordance with the invention, its preparation and its use in an autodeposition process will now be described in more detail with reference to the following Example.

### Example

An aqueous copolymer emulsion was made from vinylidene chloride 90%, methyl acrylate 8% and acrylic acid 2% using sodium lauryl sulphate as a surface active agent with a mixture of sodium metabisulphite and ammonium persulphate as the polymerisation system. The emulsion formed had a solids content of 55% and the polymer a minimum film forming temperature of 15°C.

An autodeposition coating bath was made from 100g of above emulsion, 1.0g 30% hydrogen peroxide and 1.25g 70% hydrofluoric acid made up to 1 litre with water.

A mild steel panel free of obvious surface oxidation and solvent degreased was immersed in the coating both for two minutes and when removed was heated in an oven at 135°C for four minutes. When cool the coating was clear, had a slight gloss, with good adhesion and abrasion resistance.

The panel was scored through the coating and put into a salt spray apparatus for 100 hours. On examination the coating still showed good adhesion, little surface corrosion and only slight corrosion at the score marks.

In contrast a similar panel coated from a bath of a conventional acrylic terpolymer emulsion (for autodeposition) showed a blistered, easily removable film with surface corrosion and extensive corrosion from the score marks.

### Examples 2 & 3

Coatings with similar properties to that obtained with the emulsion of Example 1 were also obtained from aqueous copolymer emulsions made from:—

a) Vinylidene chloride 87.8%, methyl acrylate 10% and acrylamide 2.2% (all by weight).

b) Vinylidene chloride 90.4%, ethylacrylate 6.7% and methyl methacrylate 2.9% (all by weight).

### Claims

1. A composition for autodeposition of a corrosion resistant coating on a metallic surface, which composition contains an acidic aqueous medium and an emulsion therein of a copolymer of vinylidene chloride and at least one other monomer copolymerizable therewith, which other monomer is selected from lower alkyl acrylates and methacrylates and their derivatives, acrylonitrile, vinyl chloride, acrylamide, acrylamide derivatives, vinyl sulphonic acid, salts and esters thereof, acrylic and methacrylic and itaconic acid, characterized in that from 70 to 95% inclusive of the weight of the copolymer is vinylidene chloride.

2. A composition according to claim 1, wherein at least 80% of the weight of the copolymer is vinylidene chloride.

3. A composition according to claim 1 or claim 2, wherein the acidic aqueous medium contains hydrofluoric or hydrochloric acid.

4. A composition according to any one of the preceding claims, which additionally contains an oxidizing agent.

5. A method of depositing a corrosion resistant coating on a metallic surface in a bath of a coating composition containing an acidic aqueous medium and an emulsion therein of a copolymer of vinylidene chloride and at least one other monomer copolymerizable therewith characterised in that from 70 to 95% inclusive by weight of the copolymer is vinylidene chloride.

6. A method according to claim 5, which includes the preliminary steps of (a) emulsion copolymerizing vinylidene chloride with at least one other monomer copolymerizable therewith, from 70 to 95% inclusive of the weight of the monomer being vinylidene chloride, to form an emulsion copolymer of said vinylidene chloride and said at least one other monomer in an aqueous medium and (b) rendering the aqueous medium acidic by the addition of an acid thereto to obtain the said composition for autodeposition.

### Patentansprüche

1. Mittel zur Selbstabscheidung eines korrosionsbeständigen Überzugs auf einer metallischen Oberfläche, wobei das Mittel ein saures, wässriges Medium und eine darin bestehende Emulsion aus einem Copolymer von Vinylidenchlorid und mindestens einem damit copolymerisierbaren anderen Monomer enthält, das unter niedrigen Alkylacrylaten und -methacrylaten und ihren Derivaten, Acrylnitril, Vinylchlorid, Acrylamid, Acrylamidderivaten, Vinylsulfonsäure, Salzen und Estern davon, Acryl- und Methacrylsäuren und Itaconsäure gewählt ist, dadurch gekennzeichnet, daß von 70 bis 95% einschließlich des Gewichtes des Copolymers aus Vinylidenchlorid besteht.

2. Mittel nach Anspruch 1, bei dem mindestens 80% des Gewichtes des Copolymers Vinylidenchlorid ist.

3. Mittel nach Anspruch 1 oder 2, bei dem das saure, wässrige Medium Fluorwasertoffsäure oder Salzsäure enthält.

4. Mittel nach einem der vorhergehenden Ansprüche, das zusätzlich ein Oxydationsmittel enthält.

5. Verfahren zur Abscheidung eines korrosionsbeständigen Überzugs auf einer metallischen Oberfläche, bei dem die metallische Oberfläche in ein Bad eines Beschichtungsmittels eingetaucht wird, das ein saures, wässriges Medium und eine darin bestehende Emulsion aus einem Copolymer von Vinylidenchlorid und mindestens einem damit copolymerisierbaren anderen Monomer enthält, dadurch gekennzeichnet, daß von 70 bis 95% einschließlich des Gewichtes des Copolymers aus Vinylidenchlorid besteht.

6. Verfahren nach Anspruch 5, das die vorbereitenden Schritte (a) einer Emulsionscopolymerisation von Vinylidenchlorid mit mindestens einem damit copolymerisierbaren anderen Monomer, wobei von 70 bis 95% einschließlich des Gewichtes des Monomers Vinylidenchlorid ist, zur Bildung eines Emulsionscopolymers des Vinylidenchlorids und des mindestens einen anderen Monomers in einem wässrigen Medium und (b) eine Ansäuerung des wässrigen Mediums durch die Zugabe einer Säure zur Gewinnung des Mittels zur Selbstabscheidung umfaßt.

**Revendications**

1. Composition pour l'autodépot d'un revêtement résistant à la corrosion sur une surface métallique, laquelle composition contient un milieu acide aqueux et une émulsion d'un copolymère de chlorure de vinylidène et d'au moins un autre monomère copolymérisable avec lui, lequel autre monomère est choisi parmi des acrylates et méthacrylates d'alcoyle inférieur et leurs dérivés, l'acrylonitrile, du chlorure de vinyle, de l'acrylamide, des dérivés d'acrylamide, de l'acide vinylsulfonique, leurs sels et esters, des acides acrylique et méthacrylique et l'acide itaconique, caractérisée en ce que 70 à 95% inclus du poids du copolymère est formé de chlorure de vinylidène.

2. Composition selon la revendication 1, où au moins 80% du poids du copolymère est du chlorure de vinylidène.

3. Composition selon la revendication 1 ou la revendication 2, où le milieu acide aqueux contient de l'acide fluorhydrique ou chlorhydrique.

4. Composition selon l'une quelconque des revendications précédentes qui contient de plus un agent oxydant.

5. Méthode de dépôt d'un revêtement résistant à la corrosion sur une surface métallique, laquelle méthode consiste à immerger la surface métallique dans un bain d'une composition de revêtement contenant un milieu acide aqueux et une émulsion d'un copolymère de chlorure de vinylidène et d'au moins un autre monomère copolymérisable avec lui, caractérisée en ce que 70 à 95% inclus en poids du copolymère est du chlorure de vinylidène.

6. Méthode selon la revendication 5 qui comprend les étapes préliminaires de (a) copolymériser en émulsion du chlorure de vinylidène avec au moins un autre monomère copolymérisable avec lui, de 70 à 95% inclus du poids du monomère étant du chlorure de vinylidène, pour former un copolymère en émulsion dudit chlorure de vinylidène et ledit au moins un autre monomère dans un milieu aqueux et (b) rendre le milieu aqueux acide par addition d'un acide pour obtenir ladite composition pour l'autodépot.